# EUROPEAN PATENT SPECIFICATION

(11) **EP 0 750 381 B1**
(45) Date of publication and mention of the grant of the patent: **18.09.2002**
(21) Application number: 95201679.8
(22) Date of filing: 21.06.1995
(51) Int. Cl.: B29C 45/00, B29C 47/70

(54) **Crushable core and cover assembly having an expanded elastomeric tubing and a chrushable core**
Zerbrechbarer Kern und Abdeckeinrichtung mit einem expandierten elastomerischen Rohr und einem zerbrechbaren Kern
Support frangible et manchon constitué d'un tube élastomère expansé et d'un support frangible

(43) Date of publication of application: 27.12.1996
(73) Proprietor: MINNESOTA MINING AND MANUFACTURING COMPANY, Saint Paul Minnesota 55144-1000 (US)
(72) Inventor: Dust, Herbert, D-21244 Buchholz (DE); Lohmeier, Gerhard, D-22041 Hamburg (DE); Viebranz, Manfred, D-21279 Appel (DE)
(74) Representative: Wilhelm, Stefan

(56) References cited:
- EP-A- 0 245 837
- EP-A- 0 530 952
- WO-A-83/01225
- WO-A-91/16564
- FR-A- 2 315 158
- US-A- 4 457 962

## Description

### Technical Field

The invention relates to a crushable structure for use with an expanded elastomeric tubing, an assembly of the crushable structure and an expanded elastomeric tubing and a method of manufacturing the crushable structure.

### Background Art

US-A-3 3189 328 describes an elastic cap for wooden poles which is held in an expanded state by a sleeve which may be made from a material which is frangible, or a material which eventually evaporates or melts, or can be cracked with a sharp blow after installation.

EP-A-0 530 952 describes various cover assemblies with frangible cores, each assembly including an expanded elastomeric tube supported in the expanded state by an internal frangible support core. One type of support core is tubular and includes threads. With this design there is little control of core fragment size when the core is crushed. Another type is manufactured from filaments in a woven or overlay structure. This type has been observed to collapse by folding and breaking at points of weakness rather than fibre fracture. Failure may occur at multiple undefined sites.

US-A-4 338 970 describes a recoverable sleeve comprising an elastomeric sleeve held in an expanded state and an outer restraint bonded to the elastomeric sleeve whereby the restraint is capable of being segmented and peeled from the elastomeric sleeve. The restraint can be a brittle material which is simply shattered with a hammer or may be a malleable material such as metal which may be segmented by tearing along weakened lines.

US-A-4 410 009 describes a recoverable sleeve assembly having a radially expanded inner elastomeric tube and an outer rigid tube surrounding and secured to the inner tube. The outer sleeve may be fractured by impact of force, e.g. from a boot, and the fragments of the outer tube may be peeled from the inner tube.

US-A-3 515 798 describes a cover assembly including a radially stretched elastomeric outer tube and a supporting inner hollow core member. The core member has a deep helical groove so that the core may be segmented and removed from the assembly.

US-A-4 287 012 describes a flexible hollow article having an expanded elastomeric inner member and an outer restraining means. The restraining means is made of a notch sensitive material so that when score lines are made in the restraining means, they can be propagated through the material by distorting the article. The outer restraining means has an extension to break of at least 25 %.

### Summary of the invention

The present invention relates to a hollow crushable support (4, 100) for supporting an elastomeric tube (2), the elastomeric tube (2) being recoverable to at least a part of its original size and shape after collapse of said support, comprising:
a plurality of substantially longitudinally extending portions (12);
a plurality of connection portions (14), each longitudinally extending portion (12) being connected to, and spaced apart from neighbouring longitudinally extending portions (12) by at least one of said connection portions (14) to form a rigid structure, and at least one of said connection portions including at least one frangible zone (16); and
wherein said support (100) is made from a compound of a polymer; and
wherein said frangible zone (16) is a weld line of said polymer; the material of said frangible zone (16) having a substantially lower breaking strength than the breaking strength of the material of said longitudinally extending portions (12).

The present invention relates to a method of producing such hollow crushable support.

The present invention furthermore refers to a method of producing a hollow crushable support (4, 100) including the step of: injecting molten polymer from an annulus at one end of an injection mold for said crushable support (4,100) so that the molten polymer flows along the longitudinally extending portions of said mold, said molten polymer entering said connecting portions of said mold from said longitudinally extending portions of said mold, and said frangible zone (16) being produced in said one connecting portion at a weld line of said molten polymer.

### Brief description of the drawings

Figure 1 shows a schematic drawing of a cover assembly in accordance with a first embodiment of the present invention;
Figures 2 and 3 show support structures in accordance with a second embodiment of the present invention;
Figures 4 and 5 show modified support structures in accordance with the second embodiment of the present invention;
Figures 6 to 8 show support structures in accordance with a third embodiment of the present invention;
Figure 9 shows a support structure in accordance with a fourth embodiment of the present invention;
Figure 10 shows a cover assembly in accordance with a fifth embodiment of the present invention;
Figure 11 shows a cover assembly in accordance with a sixth embodiment of the present invention; and
Figures 12 A to E show further constructions and forms of the support structure in accordance with the present invention.

### Description of the preferred embodiments of the invention

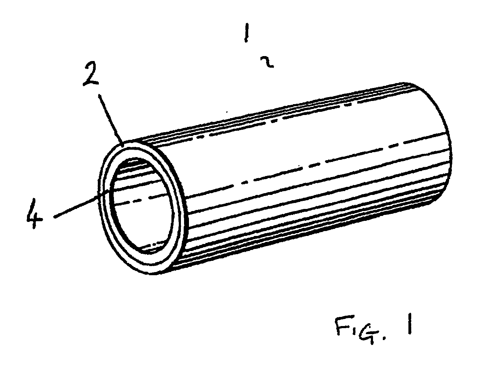

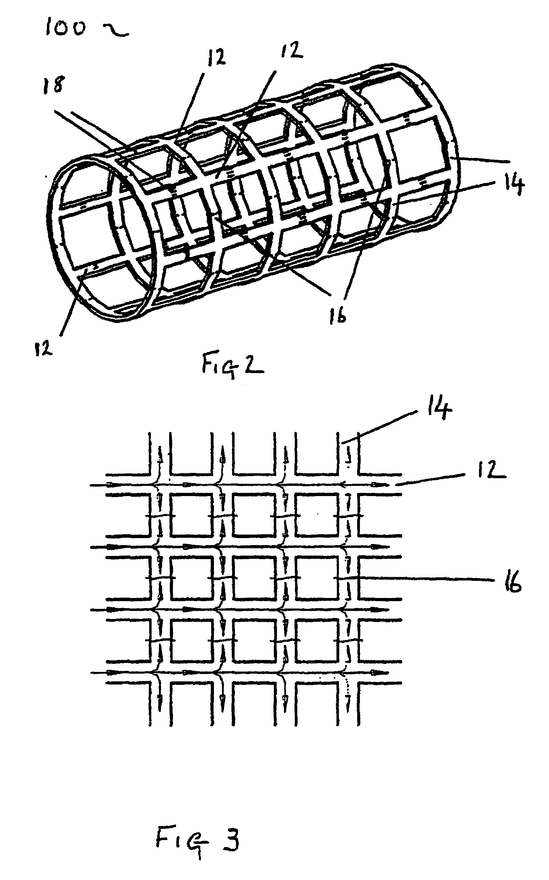

Figure 1 illustrates a cover assembly in accordance with a first embodiment of the present invention, generally indicated as 1, which includes an outer tube 2 and a frangible inner support core structure 4. In accordance with the invention, the tube 2 may be made of a flexible material which may be stretched radially to several times its original dimensions and is recoverable to substantially its original size and shape. Tube 2 may be made from an elastomeric tube which may be expanded to a large diameter and shrink back to substantially its original dimensions by the application of heat (heat shrink). Tube 2 may also be made from an elastic material which may be stretched radially and returns substantially to its original size when the expanding force is removed (cold shrink). In the following the invention will be described with reference to an inner frangible core 4 and an outer stretched elastic tube 2. The present invention is not, however, limited to this assembly. The order of the components may be reversed so that the outer cylinder shown as 2 in Fig. 1 may be a frangible support structure and the inner cylinder shown as 4 may be a flexible tube of elastic material which has been radially stretched and attached to the inner surface of the outer frangible tube 2. The inner flexible tube may be attached to the outer frangible structure by means of adhesive or the two may be adhered together by bringing them into contact and applying heat and pressure.

Some suitable materials for the flexible elastic tube 2 as used with any of the embodiments of the present invention are described in US-A-3515798 which is incorporated herein by reference. No restriction is anticipated on the chemical nature of the tube 2 material except that it must possess elasticity which allows it to be stretched and then shrink to substantially its original dimensions. Rubbery elastomers such as natural rubber, natural and synthetic polyisoprenes, cis-polybutadiene and styrene butadiene rubber, butadiene-acrylonitrile rubber, polychloroprene (neoprene), butyl rubber, polysulphide rubber, silicone rubber, urethane rubber, polyacrylate rubber, epichlorhydrin homo- and copolymer rubbers, propylene oxide rubber, fluorosilicone rubber, fluorocarbon rubber, chlorosulphonated polyethylene rubber, chlorinated polyethylene rubber, ethylene-propylene rubber, ethylene-propylene monomer terpolymer rubber (EPDM), nitroso rubber, or phosphonitrilic rubber may be suitable. Preferred materials are ethylene-propylene-diene monomer terpolymers (EPDM). Any of the above materials may be formulated to a variety of compositions by including flame retardants, conductive materials, materials to improve weathering properties, materials to produce stress grading properties etc.

The rubbery material of tube 2 may advantageously have the property of low permanent set. A permanent set of less than 30% is preferable.

A distinguishing feature of support structure 4 in accordance with any of the embodiments of the present invention may be its ability to collapse on demand by breaking. In accordance with the present invention crushable may refer to the property of the frangible support structure or of the assembly of the support structure and an elastomeric tube that the support structure may be crushed or made to collapse by forces which may be generated by the human hand or by tools provided the elastomeric tube is not damaged thereby. A further distinguishing feature of support structure 4 in accordance with any of the embodiments of the present invention may be its ability to support the expanded elastomeric tubing 2 and prevent it from collapsing. Still a further distinguishing feature of support structure 4 in accordance with any of the embodiments of the present invention may be that it is provided with frangible weak zones such that core 4 collapses in a defined way producing fragments of a specified size. It is advantageous if the frangible weak zones are made of a brittle material in particular from a material which has an extension to break of less than 10% and preferably less than 5% and particularly less than 3%. It is preferred if the crushable support structure 4 is made from such a material as a whole. A distinguishing feature of the assembly including a stretched tubing 2 and a support structure in accordance with any of the embodiments of the invention may be that the fragments of the support structure remain substantially within the tube 2 after the support structure has collapsed.

The crushable support structure 4 is preferably made from relatively thin material in order to restrict the inner diameter of the recoverable outer tube to a minimum. Thin-walled cylindrical structures may collapse by buckling or by fracture. To prevent buckling it is advantageous if the room temperature elastic modulus of the material of the crushable core 4 of any of the embodiments of the present invention is greater than 2,500 N/mm2 (ASTM D638), and preferably greater than 5,000 N/mm2. The range of elastic modulus of 10,000 to 40,000 N/mm2 is particularly preferred. Suitable materials for support core 4 for any of the embodiments of the present invention may be brittle resins or elastomers selected from the general classes of, polystyrenes including styrene acrylic nitriles and blends of polystyrene and polyphenylether, polyphenylene sulphides, polyesters, polyacrylates including polymethylmethacrylate, liquid crystal polymers including those based on polyester and polyesteramines as well as mixtures and compounds of any of the above materials. Core 4 may also be made from brittle resin materials such as epoxy resins, amine cured, two part epoxy resins, transparent styrene polyester resins and solvent soluble acrylate resins. Further, the material of core 4 may be of the general type of thermosetting resins such as phenolics. Further, any of the above materials may be reinforced by fibres, flakes, microbeads or microbubbles such as glass fibres, mica flakes, glass microbeads and the like. Core 14 may include a resin filled with microbeads or microspheres in the range of 50 to 60 micrometers in diameter and a 1:1 ratio by volume of beads to resin. Ratios below approximately 1:2 may render the core too flexible and ratios above approximately 2:1 may render the core 4 too brittle to support the tube 2. Microspheres or -beads in the diameter range of 20 - 100 micrometers have been found effective, but the range described above is preferred.

The ability of core 4 to collapse on demand is not only linked to the selection of the base material and filler components of the core 4 but also to designing in to the structure of core 4 specific, clearly defined frangible weak zones which allow core 4 to fracture in a predetermined way and thus to determine the size, shape and/or uniformity of the fragments produced on disintegration. The material making up the frangible weak zones may preferably have a breaking strength substantially lower than the bulk material in the remaining parts of core 4.

It is advantageous if core 4 in accordance with any of the embodiments of the present invention is made of an insulating material. Substantially all of the fragments of the core may be retained within the elastomeric tube 2 when it collapses down onto the substrate. Where the cover assembly 1 is to be used to insulate the junction between two cables, it is advantages when the trapped fragments of the inner core 4 are insulating.

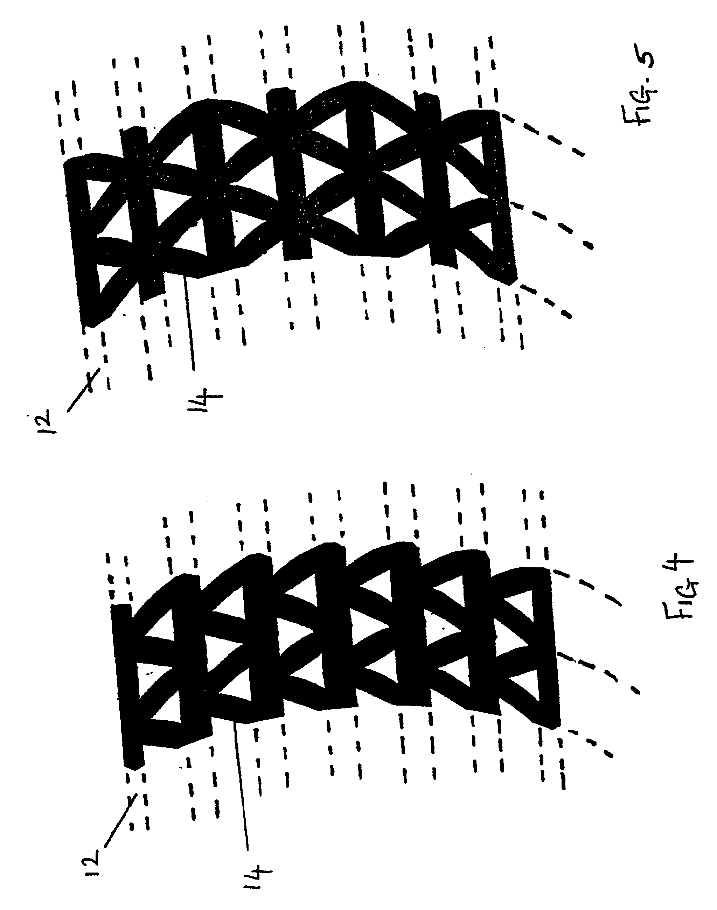

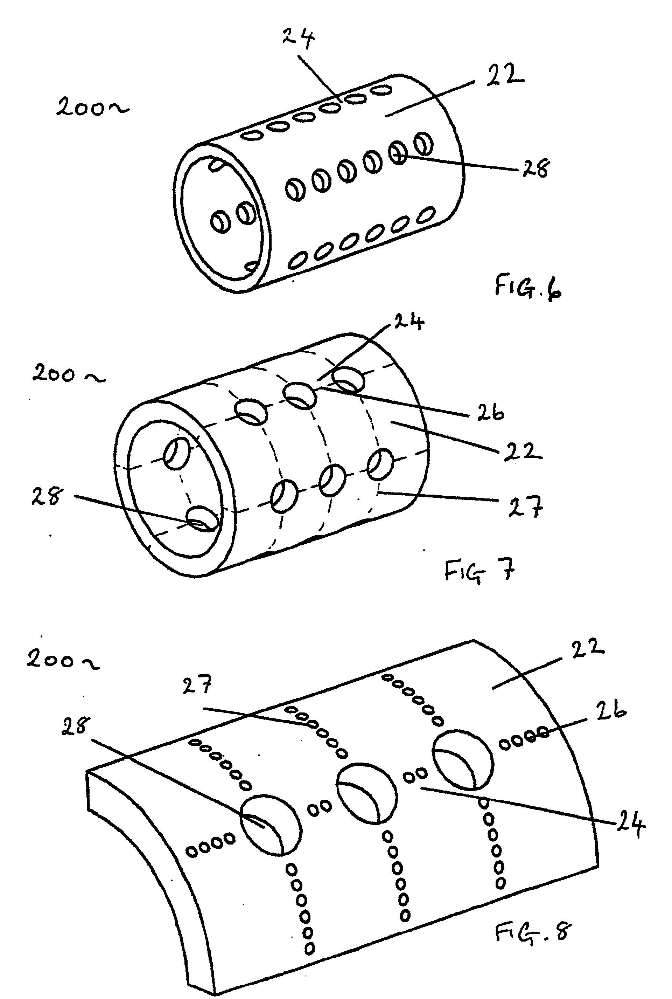

Figure 2 shows a preferred modification of the crushable core 100 in accordance with the second embodiment of the present invention. The crushable core 100 shown in figure 2 is a lattice or net structure. Frangible, discrete zones 16 are provided in the connecting members 14 which connect the longitudinal members 12 transversely.

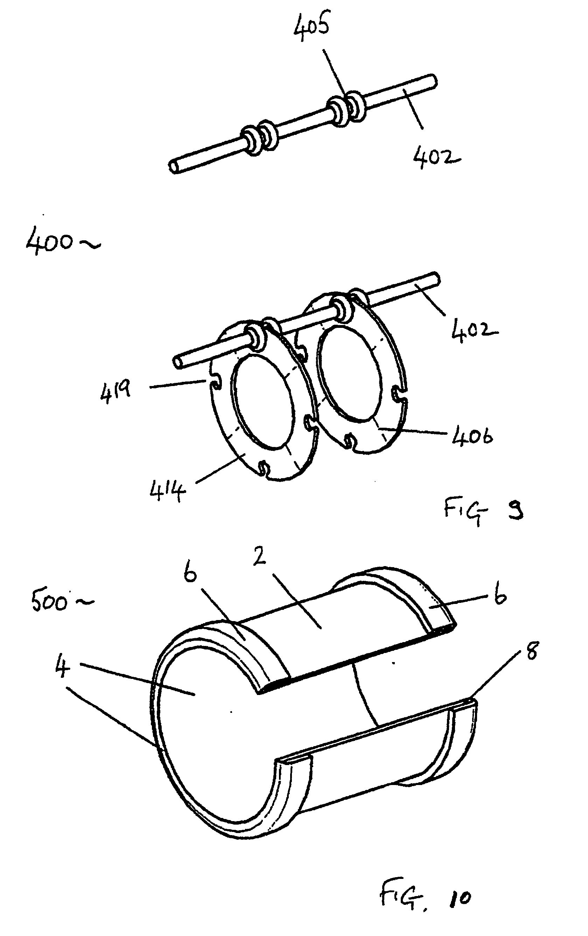

The preferred method of manufacturing the crushable core 100 shown in figure 2 will be described with respect to figure 3. Crushable core 100 in accordance with the second embodiment of the present invention may be made by injection moulding. It is preferred if the injection of the plastic material into the injection mould is carried out from an annulus at one end of the crushable core 100 so that the material flows along the longitudinal members 12 from one end of the core 100 to the other and enters the connecting members 14 from the longitudinal members 12 as shown schematically in figure 3. This method of injection moulding creates a join or weld line between two fronts of molten plastic material moving from adjacent longitudinal members 12 into a particular connecting member 14. The weld lines between the fronts of plastic materials may lie substantially in the middle of the connecting members 14. By the appropriate choice of materials and conditions during moulding, the weld lines may form discrete frangible zones which are considerably weaker then the remaining material. Thus discrete frangible zones 16 may be introduced into the connecting members 14 by the choice of material and the method of manufacture. Additional frangible zones 18 may be introduced into the longitudinal members 12, between the junction points with connecting member 14, by mechanical abrasion, cutting or partial sintering. It is particularly preferred if the materials used for injection moulding have the property of producing a weak weld line when separate fronts of molten plastic meet at the relevant parts of the injection mould. Suitable materials may be PMMA such as Lucryl® made by the company BASF, Germany, in particular type G55; or polystyrene made by the company BASF, Germany, in particular type 144C or mixtures of polystyrene and PMMA. A particularly preferred material for injection moulding the crushable core 100 in accordance with the first embodiment of the present invention is a polymer of the general type called Liquid Crystal Polymer (LCP). In particular LCP's of the type Vectra® manufactured by Hoechst AG, Frankfurt a/M, Germany and in particular the type B130 are preferred. The polystyrene, PMMA or LCP polymer may include fillers such as glass fibres, glass beads or other material to improve its mechanical properties and provide a brittle material.

A crushable core 100 made from polystyrene of the type 144C made by the company BASF, having an internal diameter of approximately 33 mm and a uniform thickness of 0.6 mm, a spacing of adjacent longitudinal members 12 and connecting members 14 of approximately 3 mm was found to be suitable for supporting expanded silicone tubes during long term storage above 60°C. A crushable core 100 with an internal diameter of approximately 33 mm, a thickness of 0.8 mm and a longitudinal member and connecting member spacing of approximately 3 mm was found to be suitable for supporting both silicone and EPDM stretched elastomeric tubing during long term storage at temperatures between 60 and 80°C. Both types of crushable core 100 collapsed by breaking mainly along the weak frangible zones in the connecting members 14 which lay roughly mid-way between adjacent longitudinal members 12. The fragments produced consisted mainly of one or two longitudinal members 12 with broken portions of connecting members 14 attached thereto. The recoverable sleeve 2 shrank down after collapse of the crushable core 100 to entrap the fragments of the crushable core 100. Tests have been carried out to determine the strength of the crushable cores 100 manufactured in accordance with the above method. Crushable cores 100 made of polystyrene type Lucryl® 144C with an internal diameter of 33 mm, a longitudinal and connecting member spacing of approximately 3 mm and a thickness of 0.6 mm withstood a load applied across a diameter of 1.30 Newtons per cm of length. The same crushable core 100 but made with a thickness of 0.8 mm withstood a transverse load of 2.5 Newtons per cm of length. A similar crushable core 100 manufactured from the LCP Vectra® B130 and having a thickness of 0.8 mm withstood a transverse load of 3.4 Newtons per cm of length. All cores 100 could be crushed easily by hand.

Materials suitable for injection moulding the crushable core 100 as shown in figure 2 are not limited to the materials mentioned above but may be any materials which are sufficiently brittle and which produce frangible zones along weld lines of the type mentioned above. Such materials may be mixtures of immiscible materials which tend to segregate out at weld lines and thus produce an inefficient bond which may provide an adequately brittle weak zone. The immiscible materials may be two immiscible polymers. Tests on manufactured samples of satisfactory crushable cores indicate that weld lines produced with the above arrangements and dimensions of crushable core 100 from LCP types B130 and C130 of the general type Vectra® from the company Hoechst AG, Germany have a breaking strength between two and ten times lower than that of the same material in the longitudinal members 12. Measured values for the weld line frangible zones 16 lie typically between three and six times lower in breaking strength than the same material in the longitudinal members 12.

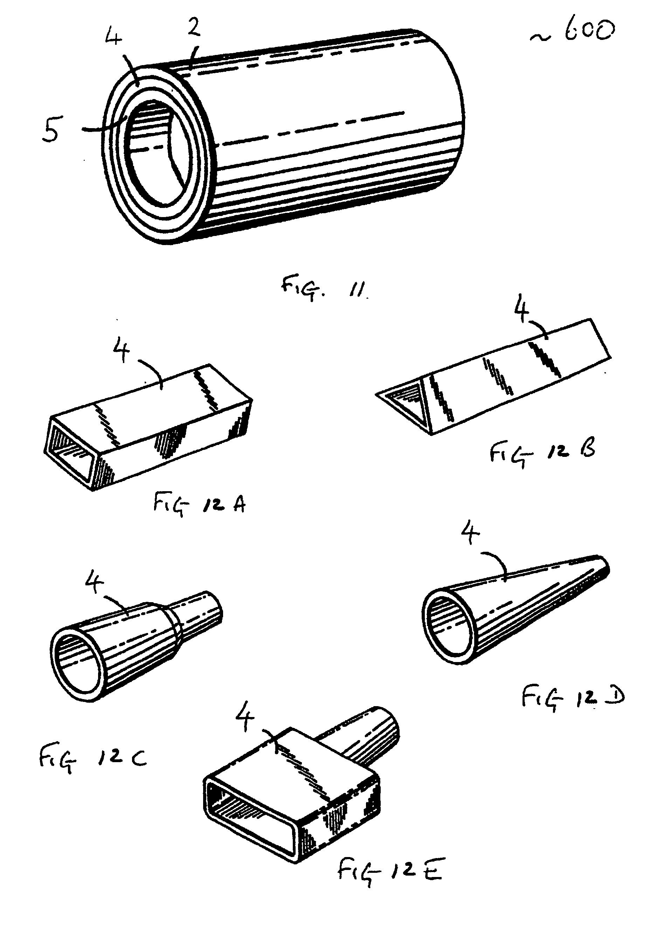

The lattice structure of crushable core 100 as shown in Figure 2 has been described with respect to transverse connecting members 14 being substantially perpendicular to the longitudinal members 12 and is preferred. Further, as shown in Figure 4 the transverse members 14 form mechanically stable rings. The invention is not, however, limited thereto. As shown schematically in Figure 4, transverse members 14 may be provided at an angle to the longitudinal members 12 such as to define triangular spaces in the lattice. Further, as shown in Figure 5, the transverse members 14 may be arranged at an angle to the longitudinal members 12 so that back-to back triangular spaces are provided in the lattice. In both the structures shown in Figures 4 and 5, there is an increase of mechanical stress at the roots of the transverse members 14 when the structure is loaded with an expanded elastic tubing. This may reduce the pressure at which the support structure collapses compared with the rectangular space construction shown in Figure 2.

The cross-sections of the longitudinal members 12 and the connecting members 14 of the support structure 100 as shown in figures 2 to 5 need not be circular, The members 12,14 could have any suitable cross-section such as rectangular or diamond shaped.

Figures 6 to 8 show crushable cores 200 in accordance with a third embodiment of the present invention. Any of the materials mentioned with respect to the first and second embodiments may be used for the third embodiment. The crushable core 200 in accordance with the third embodiment of the invention includes a substantially cylindrical core including spaces or holes 28 which segregate the core 200 into substantially longitudinal portions 22 and connection portions 24. It is not necessary for the invention that the core 200 be a circular cylinder. Core 200 may, for example, be polygonal in cross-section and may taper towards one end. In accordance with the invention it is not necessary that the longitudinal portions 22 run exactly parallel to the axis of the core 200. The distribution of holes 28 may be such that the longitudinal portion 22 have a zigzag or wavy form. The holes 28 may be cut out from a tube of material or may be moulded in place for instance by injection moulding. The holes 28 may be cut by conventional mechanical cutting means or for instance by a laser cutter. The holes 28 need not be circular but may be square, polygonal or any suitable shape. In accordance with the third embodiment of the present invention frangible zones 26 are provided in the connecting portions 24 as shown in figure 7. Optionally, further frangible zones 27 may be provided in the substantially longitudinally extending portions 22.

Figure 9 shows a crushable core 400 in accordance with the fourth embodiment of the present invention. Any of the materials described with respect to the first to third embodiment may be used with the fourth embodiment. The crushable core 400 includes a plurality of separate longitudinal members 402 which may be attached to separate connecting rings 414. Protrusions and/or notches 419 may be provided in the connecting rings 414 which co-operate with portions 405 of the longitudinal members 402 in order to locate and fix the longitudinal members 402. The connecting rings 414 include weak zones 406 which may be provided at the notches 419 or between the notches 419. The weak zones 406 may be produced by weld lines generated during injection moulding of PMMA, polystyrene, LCP or similar materials as has been described for the previous embodiments. In figure 9 only one longitudinal member 402 is shown and the connecting rings 414 are only shown with four notches 419 for receiving longitudinal members 402. The invention is not limited thereto but may include connecting rings 414 including a plurality of notches 419 into which an equivalent number of longitudinal members 402 are fixed.

With any of the embodiments of the present invention, the frangible zones are weld lines of a polymer such as polystyrene, PMMA, LCP or similar, or weld lines of a mixture of a polymer and a material immiscible with the polymer, such as another polymer, as has been described above. It has been found that frangible zones created by weld lines produced in the injection moulding or extrusion process may have a high uniformity of breaking strength. Weak frangible zones produced by mechanical abrasion on the other hand are variable as the mechanical abrasion process can seriously weaken thin brittle structures due, for instance, to vibration or jitter of the cutting tool. Further, the control of routine process variables such as temperature, pressure, injection rate, amount and type of filler, choice of polymer and viscosity of polymer, may provide fine adjustment of the strength of the frangible zones to match specific applications. The reproducibility of satisfactory product is also higher resulting in a lower scrap rate.

As shown in figure 1 the radially stretched, recoverable tubing 2 abuts the end of the crushable core 4. The invention is not limited thereto. As shown in figure 10 and in accordance with a fifth embodiment of the present invention, the recoverable elastomeric tubing 2 may be longer than the crushable core 4 and the ends 6 of tube 2 which would extend beyond the ends of crushable core 4 are rolled back onto the outer surface of the tubing 2. The interface 8 between the inside surface of the rolled-back tubing 6 and the outside surface of the tubing 2 may be prepared with a lubricating agent such as graphite or silicone grease. The assembly 500 as shown in figure 10 is installed around the substrate by crushing core 4 allowing the recovery of elastomeric tube 2 onto the substrate. Subsequently ends 6 of the tubing 2 are rolled forwards over the ends of the crushable core 4 down onto the substrate. The advantage of assembly 500 is that the ends 6 of tubing 2 are rolled onto the substrate after the diameter of tubing 2 has already been reduced to that of the substrate. This eases rolling back of the end portion 6 as the tension in the interface 8 is reduced.

The assembly 500 as shown in figure 10 may be applied to any of the crushable cores described with respect to the embodiments of the present invention.

Figure 11 shows an assembly 600 in accordance with a sixth embodiment of the present invention. As has been described with reference to figure 1, the assembly 600 also includes a recoverable tubing 2 and a crushable core 4. The crushable core 4 may be any of the crushable cores in accordance of the embodiments of the present invention. The recoverable tubing may be an elastic tubing as previously described or may be a dual-wall tubing. The inner layer of the dual-wall tubing may be made from a conformable material or may be made from a tough and/or tear resistant material. Further, within the crushable core 4 either along its whole length or for a portion or portions of its length, a conformable material 5 is applied. In case of lattice or net-like crushable cores 100,200, the conformable material 5 may penetrate into the spaces of the lattice or net structure. The conformable material 5 may be a sealant. Sealant 5 may seal tubing 2 to a substrate when crushable core 4 is crushed and tubing 2 recovers onto the substrate. Sealant 5 is preferably a mastic or other suitable viscous material. This multilayer tubular structure 600 may be positioned, for example, over an electrical wire connection and pressure applied, causing the core 4 to collapse. As the elastic tube 2 recovers, it exerts pressure on the sealant 5. This sealant 5 in turn engulfs the wire connection preventing ingress of unwanted contaminants. Simultaneously the sealant 5 flows around the fragments generated by the collapsing core 4. The sealant 5 then serves to fill the void space which exists around the wire connection and confine the core 4 fragments, sealing them against the inner surface of the elastic tube 2. Ultimately the wire connection is insulated and effectively sealed off from any environmental contamination. A suitable mastic may include the components given in Table 1.

**Table 1**

| | | | |
|---|---|---|---|
| alumina trihydrate | 30-40% | antimony pentoxide | 1-10% |
| hydrocarbon resin | 10-20% | asphalt | 1-10% |
| polybutylene | 5-15% | ethylene propylene terpolymer | 1-10% |
| magnesium carbonate | 1-10% | isobutylene -isoprene polymer | 1-10% |
| polyisobutylene | 1-10% | carbon black | 1-10% |

The sealant mastic 5 in accordance with the present invention is not limited to the above formulation. The properties of the sealant layer 5 may be modified by incorporation of functional materials. For instance, by careful selection of the concentration of a range of conductive or semiconductive particulates it is possible to provide sealant layers 5 which possess a variety of desirable attributes. Sealant layers useful for insulating, for controlling dielectric stress and for shielding have been demonstrated. A number of layers 4 having different desirable properties may be incorporated within the core 4 in addition to the one layer shown in Fig. 19.

The crushable cores 4, 100, 200 and 400 have been described with respect to cylindrical and in particular tubular structures. The invention is not limited thereto. The crushable core 4, 100, 200 and 400 may have any other suitable cross-section such as a rectangle as shown in figure 12A or a triangle as shown in figure 12B. Further, crushable core 4, 100, 200 400 need not have a uniform diameter along its length but may be stepped as shown in figure 12C and figure 12E or may be cone-shaped as shown in figure 20D. Changes of diameter as shown in Figures 12C and E may increase the loading on the crushable core 4 and also produce a non-uniform loading when a stretched elastic tubing is supported by the core. In accordance with the invention the thickness and/or width of the longitudinally extending and/or the connecting portions may be increased locally in order to provide greater stability in these regions. Accordingly, the invention is not limited to support structures of either uniform thickness or uniform diameter.

## Claims

1. Hollow crushable support (4, 100) for supporting an elastomeric tube (2), the elastomeric tube (2) being recoverable to at least a part of its original size and shape after collapse of said support, comprising:
a plurality of substantially longitudinally extending portions (12);
a plurality of connection portions (14), each longitudinally extending portion (12) being connected to, and spaced apart from neighbouring longitudinally extending portions (12) by at least one of said connection portions (14) to form a rigid structure, and at least one of said connection portions including at least one frangible zone (16); and
wherein said support (100) is made from a compound of a polymer; and
wherein said frangible zone (16) is a weld line of said polymer; the material of said frangible zone (16) having a substantially lower breaking strength than the breaking strength of the material of said longitudinally extending portions (12).

2. Hollow crushable support (4, 100) according to claim 1, wherein said support (100) is made from a mixture of said polymer and a further material immiscible with said polymer.

3. Hollaw crushable support (4, 100) according to claim 2, wherein said further material is a further polymer.

4. Hollow crushable support (4, 100) according to claim 2 or 3, wherein said polymer or said further polymer is PMMA, polystyrene or an LCP.

5. Hollow crushable support (4, 100) according to claim 3 or 4, wherein said weld line is of said polymer and said further polymer.

6. A cover assembly (1) including a hollow crushable support (4, 100) according to any of claims 1 to 5 and a radially stretched elastomeric tube supported by said support

7. A cover assembly (1) according to claim 6, wherein said hollow crushable support (4, 100) is a crushable core inside the radially stretched elastomeric tube (2).

8. A cover assembly (1) according to claim 6 or 7, wherein the elastomeric tube (2) is made from an elastic material.

9. A cover assembly (1) according to any of claims 6 to 8, wherein said radially stretched elastomeric tube (2) is longer than said crushable support (4,100) and at least one end of said radially stretched elastomeric tube (2) is folded back over the remaining part of said elastomeric tube (2).

10. A cover assembly (1) according to any of claims 6 to 9 further including at least one additional layer within said support of a viscous, sealant material (5).

11. Method of producing a hollow crushable support (4, 100) according to any of the claims 1 to 5 including the steps of:
injecting molten polymer from an annulus at one end of an injection mold for said crushable support (4,100) so that the molten polymer flows along the longitudinally extending portions of said mold, said molten polymer entering said connecting portions of said mold from said longitudinally extending portions of said mold, and said frangible zone (16) being produced in said one connecting portion at a weld line of said molten polymer.

## Patentansprüche

1. Hohler, zerbrechbarer Träger (4, 100) zur Abstützung eines elastomeren Rohrs (2), das nach Zusammenfallen des Trägers auf zumindest einen Teil seiner ursprünglichen Größe und Form rückbildbar ist, mit folgendem:
mehreren sich im wesentlichen in Längsrichtung erstreckenden Teilen (12);
mehreren Verbindungsteilen (14), wobei jeder sich in Längsrichtung erstreckende Teil (12) durch mindestens einen der Verbindungsteile (14) mit benachbarten, sich in Längsrichtung erstreckenden Teilen (12) verbunden und davon beabstandet ist, um eine starre Konstruktion zu bilden, und mindestens einer der Verbindungsteile mindestens einen zerbrechlichen Bereich (16) beinhaltet; und
wobei der Träger (100) aus einer Polymermasse hergestellt ist; und
wobei der zerbrechliche Bereich (16) eine Bindenaht des Polymers ist; wobei das Material des zerbrechlichen Bereichs (16) eine wesentlich geringere Bruchfestigkeit als die des Materials der sich in Längsrichtung erstreckenden Teile (12) aufweist.

2. Hohler, zerbrechbarer Träger (4, 100) nach Anspruch 1, wobei der Träger (100) aus einem Gemisch aus dem Polymer und einem weiteren mit dem Polymer unvermischbaren Material besteht.

3. Hohler, zerbrechbarer Träger (4, 100) nach Anspruch 2, bei dem das weitere Material ein weiteres Polymer ist.

4. Hohler, zerbrechbarer Träger (4, 100) nach Anspruch 2 oder 3, bei dem das Polymer oder das weitere Polymer PMMA, Polystyrol oder ein LCP ist.

5. Hohler, zerbrechbarer Träger (4, 100) nach Anspruch 3 oder 4, bei dem die Bindenaht die des Polymers und des weiteren Polymers ist.

6. Abdeckanordnung (1) mit einem hohlen, zerbrechbaren Träger (4, 100) nach einem der Ansprüche 1 bis 5 und einem durch den Träger abgestützten radial gedehnten elastomeren Rohr.

7. Abdeckanordnung (1) nach Anspruch 6, bei der der hohle, zerbrechbare Träger (4, 100) ein zerbrechbarer Kern innerhalb des radial gedehnten elastomeren Rohrs (2) ist.

8. Abdeckanordnung (1) nach Anspruch 6 oder 7, bei der das elastomere Rohr (2) aus einem elastischen Material hergestellt ist.

9. Abdeckanordnung (1) nach einem der Ansprüche 6 bis 8, bei der das radial gedehnte elastomere Rohr (2) länger ist als der zerbrechbare Träger (4, 100) und mindestens ein Ende des radial gedehnten elastomeren Rohrs (2) über den verbleibenden Teil des elastomeren Rohrs (2) zurückgeklappt ist.

10. Abdeckanordnung (1) nach einem der Ansprüche 6 bis 9, weiterhin mit mindestens einer zusätzlichen Schicht innerhalb des Trägers aus einem viskosen Dichtungsmaterial (5).

11. Verfahren zur Herstellung eines hohlen, zerbrechbaren Trägers (4, 100) nach einem der Ansprüche 1 bis 5, bei dem man
Polymerschmelze aus einem Ring an einem Ende eines Spritzgießwerkzeugs für den zerbrechbaren Träger (4, 100) einspritzt, so daß die Polymerschmelze entlang den sich in Längsrichtung erstreckenden Teilen des Werkzeugs fließt und aus diesen in die Verbindungsteile des Werkzeugs eintritt, wobei der zerbrechliche Bereich (16) an einer Bindenaht der Polymerschmelze in dem einen Verbindungsteil erzeugt wird.

## Revendications

1. Support creux pouvant être écrasé (4, 100) pour supporter un tube élastomère (2), le tube élastomère (2) pouvant récupérer au moins une partie de sa taille et de sa forme d'origine après l'affaissement dudit support, comprenant :
une pluralité de portions (12) s'étendant substantiellement longitudinalement ;
une pluralité de portions de connexion (14), chaque portion (12) s'étendant longitudinalement étant connectée à, et espacée de portions (12) adjacentes s'étendant longitudinalement par au moins l'une desdites portions de connexion (14) pour former une structure rigide, et au moins l'une desdites portions de connexion comportant au moins une zone frangible (16) ; et
dans lequel ledit support (100) est fabriqué en un composé d'un polymère ; et
dans lequel ladite zone frangible (16) est une ligne de soudure dudit polymère ; le matériau de ladite zone frangible (16) ayant une résistance à la rupture substantiellement plus faible que la résistance à la rupture du matériau desdites portions (12) s'étendant longitudinalement.

2. Support creux pouvant être écrasé (4, 100) selon la revendication 1, dans lequel ledit support (100) est fabriqué à partir d'un mélange dudit polymère et d'un matériau supplémentaire non miscible dans ledit polymère.

3. Support creux pouvant être écrasé (4, 100) selon la revendication 2, dans lequel ledit matériau supplémentaire est un polymère supplémentaire.

4. Support creux pouvant être écrasé (4, 100) selon la revendication 2 ou 3, dans lequel ledit polymère ou ledit polymère supplémentaire est du PMMA, du polystyrène ou un LCP.

5. Support creux pouvant être écrasé (4, 100) selon la revendication 3 ou 4, dans lequel ladite ligne de soudure est dudit polymère et dudit polymère supplémentaire.

6. Ensemble de manchon (1) comportant un support creux pouvant être écrasé (4, 100) selon l'une quelconque des revendications 1 à 5, et un tube élastomère étiré radialement supporté par ledit support.

7. Ensemble de manchon (1) selon la revendication 6, dans lequel ledit support creux pouvant être écrasé (4, 100) est un noyau pouvant être écrasé à l'intérieur du tube élastomère étiré radialement (2).

8. Ensemble de manchon (1) selon la revendication 6 ou 7, dans lequel le tube élastomère (2) est fabriqué à partir d'un matériau élastique.

9. Ensemble de manchon (1) selon l'une quelconque des revendications 6 à 8, dans lequel ledit tube élastomère étiré radialement (2) est plus long que ledit support pouvant être écrasé (4, 100) et au moins une extrémité dudit tube élastomère étiré radialement (2) est repliée vers l'arrière pardessus la partie restante dudit tube élastomère (2).

10. Ensemble de manchon (1) selon l'une quelconque des revendications 6 à 9, comportant en outre au moins une couche supplémentaire dans ledit support, en matériau visqueux isolant (5).

11. Procédé de fabrication d'un support creux pouvant être écrasé (4, 100) selon l'une quelconque des revendications 1 à 5, comportant les étapes consistant à :
injecter du polymère fondu provenant d'un espace annulaire à une extrémité d'un moule d'injection pour ledit support pouvant être écrasé (4, 100) de sorte que le polymère fondu s'écoule le long des portions s'étendant longitudinalement dudit moule, ledit polymère fondu entrant dans lesdites portions de connexion dudit moule par lesdites portions s'étendant longitudinalement dudit moule, et ladite zone frangible (16) étant fabriquée dans l'une desdites portions de connexion au niveau d'une ligne de soudure dudit polymère fondu.
